# EUROPEAN PATENT SPECIFICATION

(11) **EP 4 083 864 B1**
(45) Date of publication and mention of the grant of the patent: **05.06.2024**
(21) Application number: 21170360.8
(22) Date of filing: 26.04.2021
(51) Int. Cl.: G06K 19/077, G06K 17/00

(54) **SECURITY SHEET WITH RFID SECURITY ELEMENT**
SICHERHEITSFOLIE MIT RFID-SICHERHEITSELEMENT
FEUILLE DE SÉCURITÉ DOTÉE D'UN ÉLÉMENT DE SÉCURITÉ RFID

(43) Date of publication of application: 02.11.2022
(73) Proprietor: Fase S.r.l., 20137 Milan (IT); Nolecom ID S.r.l., 20146 Milano (IT)
(72) Inventor: BALLABIO, Eligio, 55045 Marina di Pietrasanta (IT); BERARDI, Francesco, 20021 Bollate (IT); CIMATTI, Luca, 22070 Luisago (IT); LANCINI, Marco, 25030 Adro (IT); TAGLIANI, Roberto, 27029 Vigevano (IT)
(74) Representative: Osha BWB

(56) References cited:
- WO-A2-2011/127329
- CN-A- 111 860 715
- GB-A- 2 566 323
- US-A1- 2003 136 503
- US-A1- 2004 125 040
- US-B2- 7 221 258

## Description

The present invention relates to a security sheet with an RFID security element, a method of manufacturing such security sheet, and a security document comprising or composed of such security sheet.

More generally, the present invention relates to provide protection against forgery or counterfeiting of any kinds of documents which are to be protected and/or uniquely identified, hereinafter referred to as security documents. Such security documents may exemplarily include banknotes, passports, ID cards, bank cards, credit cards, bonds, checks, coupons, vouchers, tickets, packages, stamps, certificates, or the like.

It is conventionally known that forgery or counterfeiting protection of a security document is provided by usage of a specific security sheet (such as a specifically characterized paper or plastic) and/or provision of a specific security element (such as a specifically characterized security thread, strip or patch). Also, it is conventionally known that an RFID tag is incorporated in a security document for security purposes.

Further cited prior art documents are US 7 221 258 B2 showing hierarchical electronic watermarks and method of use, CN 111 860 715 A, showing a liquor anti-counterfeiting traceability system and method based on blockchain and RFID, US 2004/125040 A1 showing a RFID device and method of forming and GB 2 566 323 A showing a secure RFID tag identification.

It is an object of the present invention to provide a security sheet with an RFID security element, which is capable of improving protection against forgery or counterfeiting of the security sheet as such and/or a security document comprising or composed of the security sheet.

According to a first aspect of the present invention, there is provided a security sheet as defined by any one of claims 1 to 9.

According to a second aspect of the present invention, there is provided a security document as defined by any one of claims 10 and 11.

According to a third aspect of the present invention, there is provided a method of manufacturing a security sheet as defined by any one of claims 12 to 21.

According to a fourth aspect of the present invention, there is provided a security sheet as defined by claim 22.

For example, a security sheet according to an exemplary aspect of the present invention comprises a sheet material and a security element, wherein the security element is embedded in the sheet material, the security element includes a passive RFID tag comprising at least a chip with a memory and an antenna, and a universal unique identifier for uniquely identifying the security sheet is invariably stored in the memory, wherein the universal unique identifier comprises a unique code representing a unique random number generated during manufacturing of the security sheet and stored in a memory area which is protected by a one-time password for a single writing operation during manufacturing of the security sheet.

For example, a method of manufacturing a security sheet according to an exemplary aspect of the present invention comprises providing a security element which includes a passive RFID tag comprising at least a chip with a memory and an antenna, wherein a universal unique identifier for uniquely identifying the security sheet is invariably stored in the memory, and embedding the security element in a sheet material, wherein the universal unique identifier comprises a unique code representing a unique random number generated during manufacturing of the security sheet and stored in a memory area which is protected by a one-time password for a single writing operation during manufacturing of the security sheet.

According to the present invention, as outlined above, a security sheet with an RFID security element, which is capable of improving protection against forgery or counterfeiting of the security sheet as such and/or a security document comprising or composed of the security sheet can be realized.

Further developments and/or modifications of the aforementioned exemplary aspects of the present invention are set out below.

In the following, the present invention and embodiments thereof will be described in greater detail by way of non-limiting examples with reference to the accompanying drawings, in which
Figures 1A and 1B show schematic configurations of a security sheet according to an embodiment,
Figure 2 shows a flowchart of a manufacturing method of a security sheet according to an embodiment,
Figure 3 shows an example of a top view of a security element according to an embodiment,
Figure 4 shows a first example of a cross-sectional view of a security element according to an embodiment, and
Figure 5 shows a second example of a cross-sectional view of a security element according to an embodiment,
Figure 6 shows a third example of a cross-sectional view of a security element according to an embodiment, and
Figure 7 shows a fourth example of a cross-sectional view of a security element according to an embodiment.

The present invention is described herein with reference to particular non-limiting examples and to what are presently considered to be conceivable (examples of) embodiments. A person skilled in the art will appreciate that the present disclosure is by no means limited to these examples and embodiments, and may be more broadly applied.

According to embodiments of the present disclosure, in general terms, there are provided a security sheet with an RFID security element, which is capable of improving protection against forgery or counterfeiting of the security sheet as such and/or a security document comprising or composed of the security sheet, as well as a method of manufacturing such security sheet, and a security document comprising or composed of such security sheet.

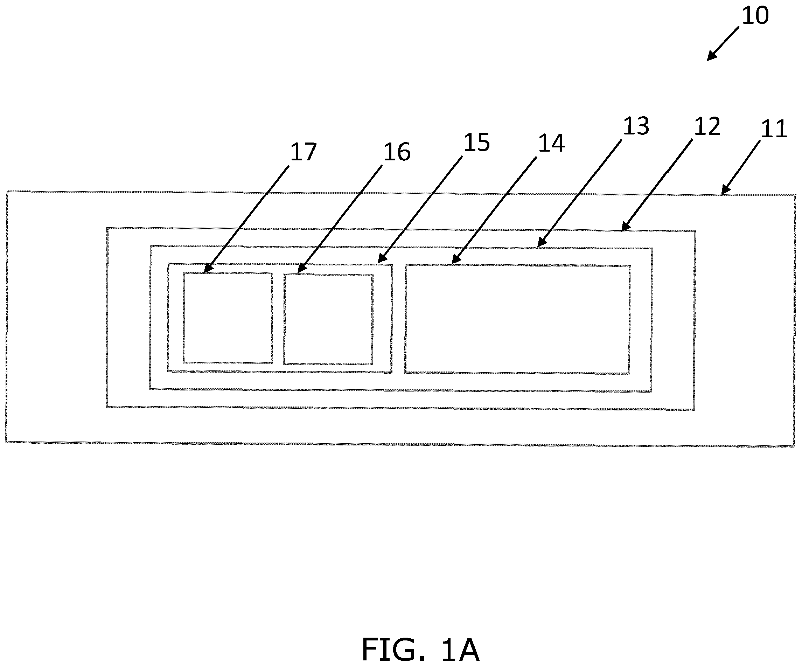

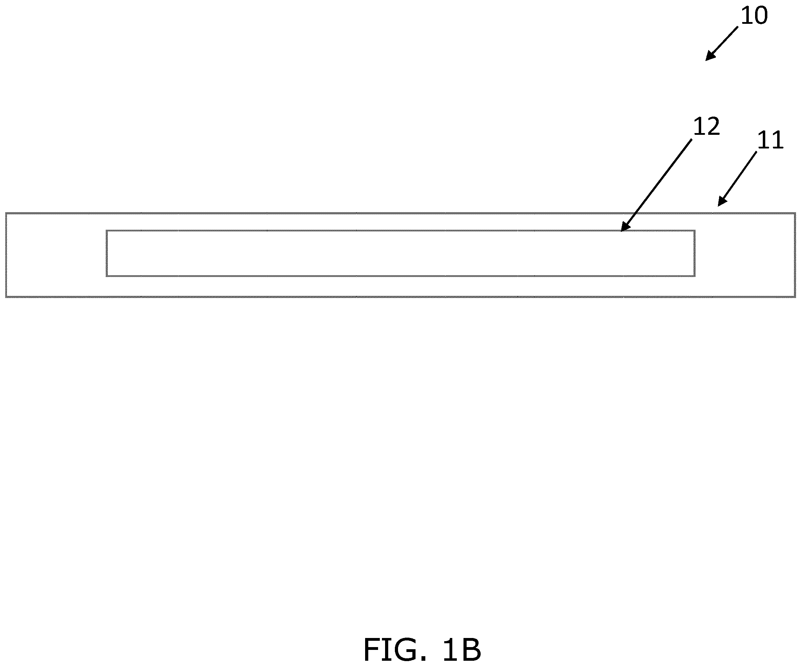

Figures 1A and 1B show schematic configurations of a security sheet according to an embodiment.

Figure 1A shows an example of a top view of the security sheet, and Figure 1B shows an example of a cross-sectional view of the security sheet.

As shown in Figure 1A, a security sheet 10 according to an embodiment comprises or is composed of a sheet material 11 and a security element 12 which is embedded in the sheet material 11. Preferably, the security element 12 may be embedded in the sheet material 11 in an inseparably manner, meaning that the security element 12 cannot be indestructibly separated from the sheet material 11. Thereby, an intrinsic protection can be assured in that the security element 12 is no longer usable (i.e. working or functional) when being separated from the sheet material 11.

Depending on the purpose or application of the security sheet 10, the security element 12 may have the form of any one of a thread, a strip, a patch, or the like, and/or the sheet material 11 may be or comprise any one of paper, plastic, or the like. The security element 12 may be a distinct or separate element/part or may be a portion of a larger element/part, such as a section or segment of a continuous or endless band, ribbon, etc. out of which one or more security elements are produced by extraction, cutting, or the like.

According to an embodiment, the security sheet 10 may be used for producing (a part, section or element of) a security document, i.e. any kind of document which is to be protected and/or uniquely identified, such as e.g. a banknote, a passport, an ID card, a bank card, a credit card, a bond, a check, a coupon, a voucher, a ticket, a package, a stamp, a certificate, or the like.

As shown in Figure 1B, the security element 12 is embedded in the sheet material 11, such as e.g. paper, plastic, or the like. It is to be noted that the orientation of the security element with respect to the security material is arbitrary, and the placement of the security element in the security material is variable (i.e. the distances to the upper surface, the lower surface and/or the edges of the security material are arbitrary).

As shown in Figure 1A, the security element 12 comprises a passive RFID tag 13. The passive RFID tag 13 represents an RFID (radio frequency identification) transponder, preferably of inductive type, which is configured to radiate an RF (radio frequency) signal when being activated/triggered by an external source or reader.

As shown in Figure 1A, the RFID tag 13 comprises an antenna 14 and a chip 15, wherein the chip 15 comprises a processor 16 and a memory 17. It is noted that, for the sake of convenience, no (analog) transceiver is shown, while there may be a transceiver for interconnecting the antenna 14 and the chip 15. The memory 17 may be a single memory or memory area or may comprise plural memories or memory areas. Preferably, the memory 17 may comprise a TID (tag identifier) memory or memory area and an EPC (electronic product code) memory or memory area.

In the memory 17 of the RFID tag 13 a universal unique identifier (UUID) for uniquely identifying the security sheet 10 is invariably (or fixedly or non-rewritably) stored. That is, the UUID is capable of uniquely identifying the security sheet 10, and the UUID is stored in the memory 17 such that it cannot be modified.

According to an embodiment, the UUID comprises a unique code (such as a hexadecimal code), which represents a unique random number generated during manufacturing of the security sheet, and which is stored in a (write-) protected memory or memory area of the memory 17. By generating and utilizing a unique random number (or incremental code) during manufacturing of the security sheet, preferably dismissing, invalidating or deleting the same after storage in the memory, uniqueness of the unique code stored in the memory 17 can be ensured. The (write-)protected memory or memory area may preferably be protected by a one-time password for a single writing operation during manufacturing of the security sheet. By randomly generating the password and/or dismissing, invalidating or deleting the password after being once applied for the single writing operation during manufacturing, the unique code stored in the memory 17 cannot be modified after the single writing operation during manufacturing.

According to a variant, the UUID may comprise or may be composed of a unique tag identifier of the RFID tag and the unique code representing the unique random number generated during manufacturing of the security sheet. In this regard, the unique tag identifier is a unique identification code (such as a hexadecimal code) which is uniquely assigned to the RFID tag 13 during its manufacturing. Preferably, the UUID may be (regarded as) a concatenation or combination of the unique tag identifier and the unique code representing the unique random number generated during manufacturing of the security sheet.

Preferably, the unique code representing the unique random number generated during manufacturing of the security sheet may be stored in the EPC memory or memory area of the memory 17 (if present), and/or the unique tag identifier may be stored in the TID memory or memory area of the memory 17 (if present).

In order to enable authentication of the security sheet 10, the RFID tag 13 may preferably be configured to radiate an RF (radio frequency) signal indicative of or representing the UUID. Namely, when the RFID tag 13 is activated/triggered by an external source or reader, it radiates/emits (an RF signal corresponding to) the UUID. In view of the above-described configurations of the UUID, the RFID tag 13 may be configured to radiate/emit, via its antenna 14, either the unique code representing the unique random number generated during manufacturing of the security sheet or both the unique code representing the unique random number generated during manufacturing of the security sheet and the unique tag identifier. In the latter case, receiving/acquiring both the unique code and the unique tag identifier by the external source or reader may be regarded as receiving/acquiring a concatenation or combination thereof, thus receiving/acquiring the UUID.

It is to be noted that the authenticity of the security sheet 10 (or the security document comprising or being composed of the security sheet 10) is intrinsic and given by its UUID, such as the pair of the unique tag identifier (as stored e.g. in the TID memory or memory area) and the unique code (as stored e.g. in the EPC memory or memory area).

By receiving/acquiring the UUID of the security sheet 10, the authenticity of the security sheet or the security document comprising or being composed of the security sheet can be unambiguously verified. To this end, the UUID or a hash value of the UUID is registered in at least one blockchain, i.e. one or more public and/or private blockchains, during manufacturing of the security sheet. Any such blockchain can for example be managed by a certification authority (CA). The at least one blockchain, i.e. the thus registered UUID or its hash value can, then be utilized in/for verifying the authenticity of the security sheet or the security document comprising or being composed of the security sheet. Specifically, in/for authenticity verification, the RFID tag can be triggered to radiate the UUID, the UUID can be authenticated via the at least one blockchain by checking whether or not the UUID or its hash value is registered therein, and the security sheet or the security document can be assumed to be authentic when its registration is determined/detected.

According to an embodiment, registration of the UUID in the blockchain is performed for ensuring the persistence and non-modifiability of the information specific to (authentication of) the security sheet, thus providing protection against forgery or counterfeiting.

In this regard, various approaches and implementations are conceivable in terms of registration and/or verification by use of a blockchain.

For example, a (concatenation or combination of) the unique tag identifier (as stored e.g. in the TID memory or memory area) and the unique code (as stored e.g. in the EPC memory or memory area), optionally together with a set of metadata regarding information concerning the manufacturing of the RFID tag and/or the security sheet (such as subjects involved in the production chain, production date, etc.), can be stored/registered in a block of the blockchain. Thereby, it can be always known and thus verified that e.g. a security sheet with a particular UUID was produced on a particular date.

For example, a portal (of some provider) can be used to create a blockchain transaction relating to the manufacturing of a particular security sheet and to enter this information into the blockchain (e.g. the blockchain of this provider). Such portal can save the hash value of the transaction so that the validity of the related data can be checked over time. As mentioned above, both public and private blockchains can be used. Public blockchains (which are provided by several providers) are online and by definition decentralized on thousands of servers around the world. Private blockchains, are decentralized and do not allow everyone to see their content.

For example, portal authentication (of a security sheet or a security document) can be managed by a provider. To verify the authenticity of a security sheet or a security document, the hash value of the associated blockchain transaction can be used to go through the portal as a verification tool.

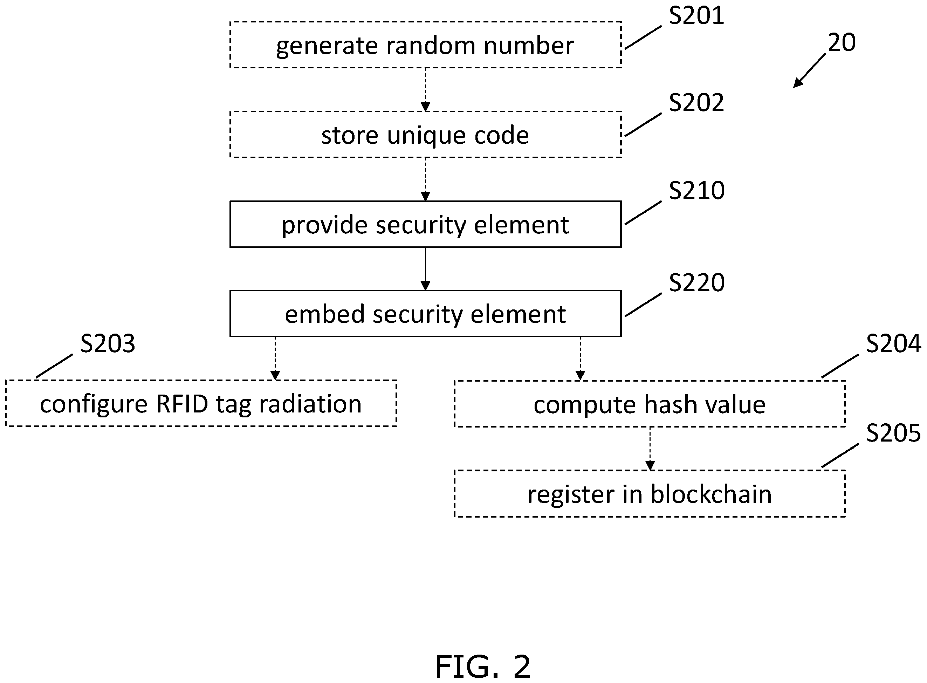

Figure 2 shows a flowchart of a manufacturing method of a security sheet according to an embodiment.

As shown in Figure 2, a manufacturing method 20 of a security sheet according to an embodiment comprises a step or operation of providing a security element (S210), such as supplying or furnishing the security element, wherein the security element includes a passive RFID tag, and a step or operation of embedding the security element in a sheet material (S220). For further details of the security element, the security material or the like, reference is made to the description of Figures 1A and 1B, which equally applies here accordingly, while reiteration of such details is omitted for the sake of convenience.

As shown in Figure 2, the manufacturing method may also comprise a step or operation of generating the unique random number (S201), and a step or operation of storing the unique code representing the generated unique random number in the protected memory area using the one-time password (S202). For example, the unique random number and/or the one-time password may be generated by a proprietary algorithm, respectively. For example, the unique code may be stored in the EPC memory or memory area of the RFID tag. Hence, the provided security element is preconfigured/established in the course of the manufacturing method.

As shown in Figure 2, the manufacturing method may also comprise a step or operation of configuring the RFID tag to radiate an RF signal indicative of or representing the universal unique identifier (S203). For example, the RFID tag may be configured to emit/radiate the unique tag identifier (as stored e.g. in the TID memory or memory area) and the unique code (as stored e.g. in the EPC memory or memory area), when the RFID tag is activated/triggered by an external source or reader. For example, such configuration may be accomplished/effected by a corresponding programming or set-up of the processor of the RFID tag, a corresponding setup of the cooperation between antenna and memory, or the like.

As shown in Figure 2, the manufacturing method may also comprise a step or operation of computing a hash value of the universal unique identifier (S204) and a step or operation of registering the hash value of the universal unique identifier in at least one blockchain (S205).

For further details regarding such optional steps or operations, reference is made to the description of Figures 1A and 1B, which equally applies here accordingly, while reiteration of such details is omitted for the sake of convenience.

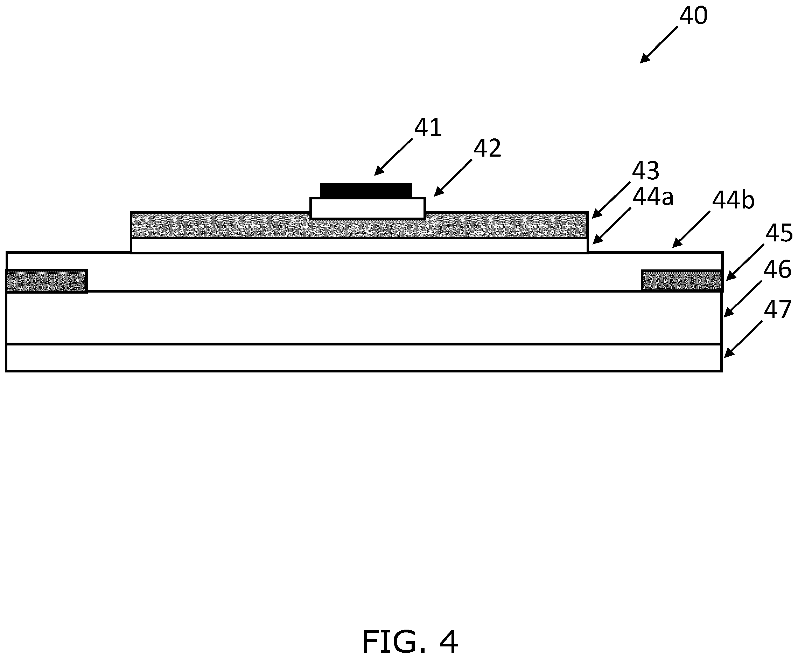

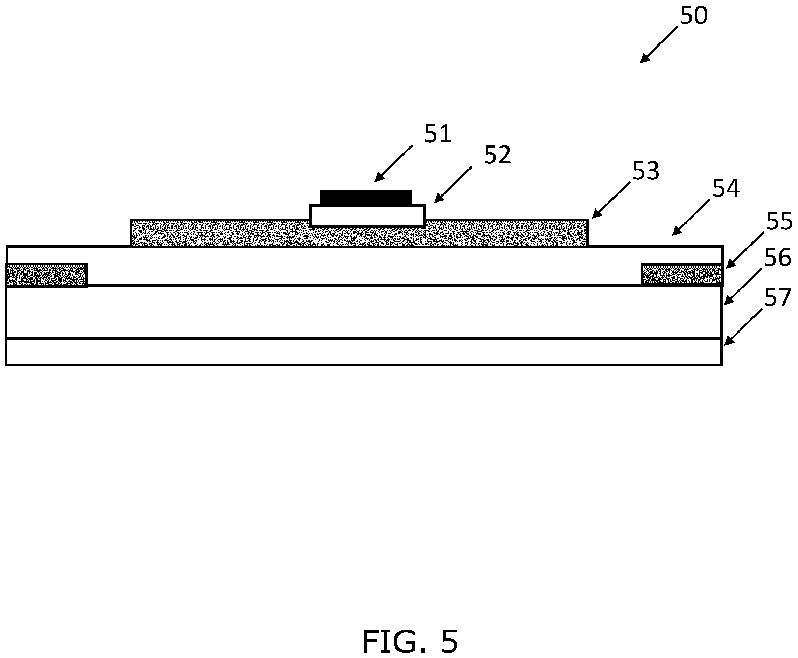

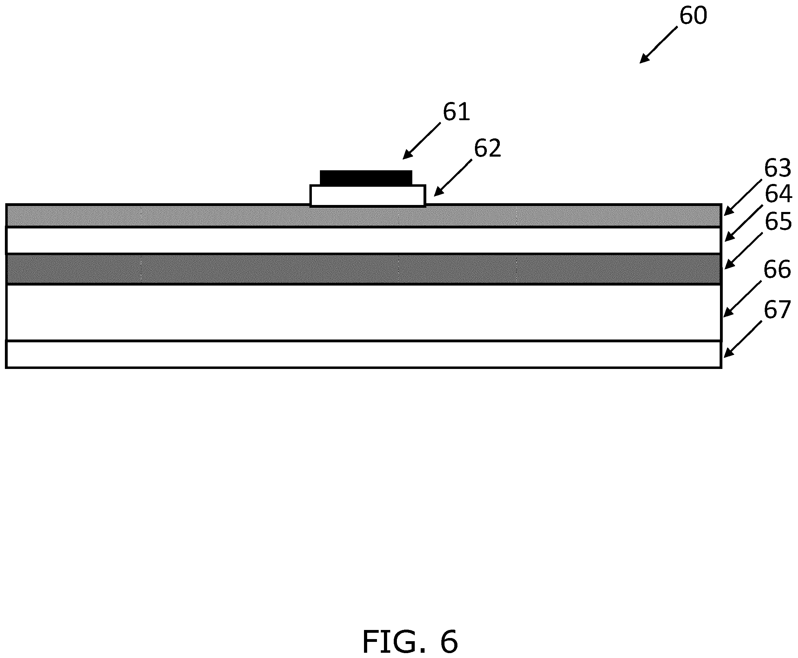

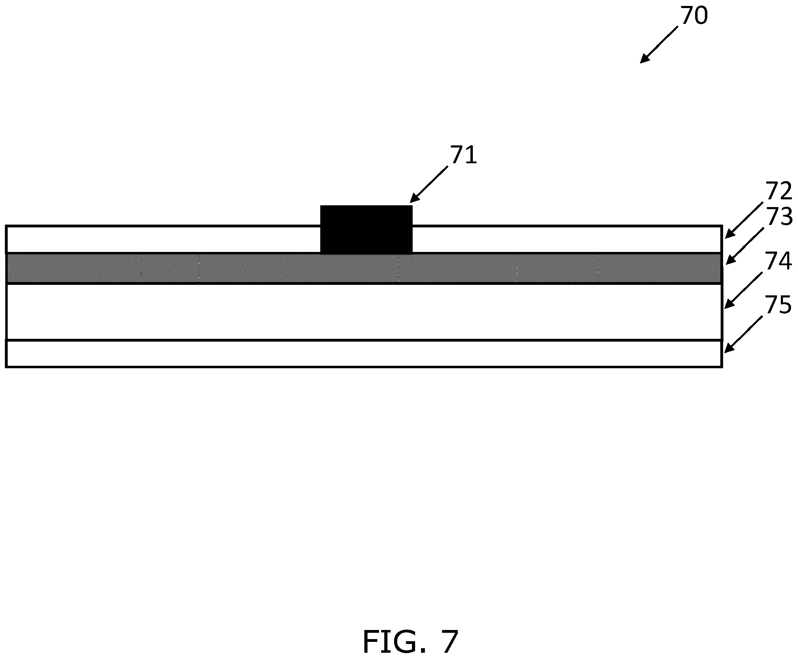

Depending on the structure of the security sheet and/or the security element, the manufacturing method 20 according to various embodiments may comprise corresponding steps or operations, i.e. manufacturing steps or operations capable of obtaining a corresponding structure. For example, for obtaining a structure as illustrated in any one of Figures 4 and 5, the method may comprise tying an antenna layer, in which the antenna of the RFID tag is implemented, to a substrate layer by at least one adhesive, and tying the chip of the RFID tag to the antenna layer by an adhesive. For example, for obtaining a structure as illustrated in Figure 6, the method may comprise tying an antenna layer, in which the antenna of the RFID tag is implemented, to a substrate layer via a metal layer by an adhesive, and tying the chip of the RFID tag to the antenna layer by an adhesive. For example, for obtaining a structure as illustrated in Figure 7, the method may comprise disposing a metal layer, in which the antenna of the RFID tag is implemented, on a substrate layer, and tying the chip of the RFID tag to the metal layer by an adhesive. For details of the resulting structures, reference is made to the description of Figures 4 to 7 below.

It is to be noted that, a manufacturing method 20 according to various embodiments may comprise any combination of the aforementioned optional steps or operations, although all of them are commonly shown in Figure 2 for illustrative purposes. That is, a manufacturing method may comprise steps or operations S201, S202, S210, S220, S204 and S205, or may comprise steps or operations S210, S220, S204 and S205 (assuming that a unique code representing the unique random number is already stored in the memory of the RFID tag when the security element is provided), or the like.

According to the present disclosure, a security sheet according to an embodiment may be a security sheet as illustrated by Figures 1A and 1B (and described in conjunction therewith) and/or a security sheet which is obtained or obtainable by a manufacturing method as illustrated by Figure 2 (and described in conjunction therewith).

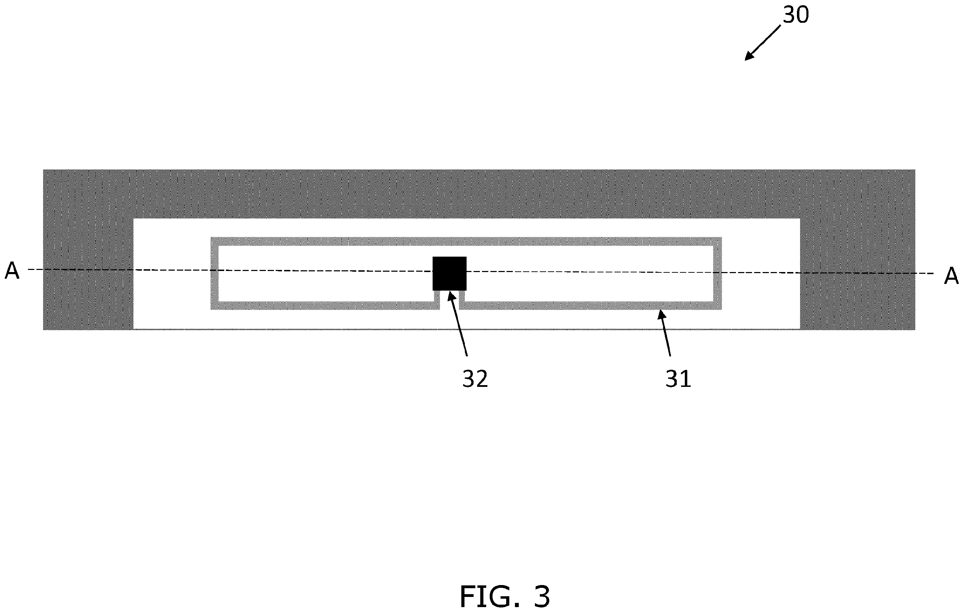

Figure 3 shows an example of a top view of a security element according to an embodiment.

As shown in Figure 3, a security element 30 according to an embodiment may comprise a chip 32 of the RFID tag (such as chip 15 of RFID tag 13 shown in Figure 1A) and an antenna 31 tag (such as antenna14 of RFID tag 13 shown in Figure 1A) so as to be visible when viewed from the top, e.g. on (part of) a top surface. While the chip 32 is illustrated as a rectangle and the antenna 31 is illustrated in a loop shape, it is to be noted that such shapes are only exemplary and illustrative, and the chip and the antenna may have any conceivable shape, as well as any conceivable mutual spatial relationship. Generally, any shape and dimension, including the shape and length of the antenna 31, may be variable and defined depending on the available size and/or required characteristics of the security sheet or the security document to be produced therewith.

According to an embodiment, a security element, such as any one of security elements 12 and 30, may have a layered structure.

Figure 4 shows a first example of a cross-sectional view of a security element according to an embodiment, namely an example of a cross-section along line A-A in Figure 3.

As shown in Figure 4, a security element 40 according to an embodiment has a layered structure comprising, from top to bottom (in the drawing), a chip 41, an adhesive 42, an antenna layer 43, an adhesive 44a, an adhesive 44b, a metal layer 45, a PET (polyethylene terephthalate) layer 46 and an adhesive 47.

In such configuration, the metal layer 45 cooperates with the antenna layer 43 for providing/realizing the antenna function (i.e. the RF signal emission/radiation functionality) of the security element. Namely, the metal layer reflects and thus amplifies the RF signal being emitted/radiated by the antenna. For example, the thickness of the antenna or antenna layer may be in the order of microns.

In view of the exemplary configuration of Figure 4, a security element according to an embodiment may have a layered structure, such that the antenna of the RFID tag is implemented in an antenna layer (i.e. antenna layer 43) which is tied to a substrate layer (i.e. PET layer 46) by two adhesives (i.e. adhesive 44a and adhesive 44b), and the chip of the RFID tag (i.e. chip 41) is tied to the antenna layer (i.e. antenna layer 43) by an adhesive (i.e. adhesive 42).

It is to be noted that the configuration of Figure 4 is only an example, and various modifications are conceivable without departing from the foregoing description of an exemplary layered structure of a security element according to an embodiment. For example, the adhesive 47 may be omitted, the substrate layer may be formed of another material than PET, there may be an adhesive between the metal layer 45 and the PET layer 46, the antenna layer 43 may occupy the entirety of the lower layers, the dimension/extension of the metal layer 45 may be different (with respect to e.g. the antenna layer 43, such as e.g. being at least partly below the antenna layer 43), the chip 41 does not need to be placed in the middle, or the like.

Figure 5 shows a second example of a cross-sectional view of a security element according to an embodiment, namely an example of a cross-section along line A-A in Figure 3.

As shown in Figure 5, a security element 50 according to an embodiment has a layered structure comprising, from top to bottom (in the drawing), a chip 51, an adhesive 52, an antenna layer 53, an adhesive 54, a metal layer 55, a PET (polyethylene terephthalate) layer 56 and an adhesive 57.

In such configuration, the metal layer 55 cooperates with the antenna layer 53 for providing/realizing the antenna function (i.e. the RF signal emission/radiation functionality) of the security element. Namely, the metal layer reflects and thus amplifies the RF signal being emitted/radiated by the antenna. For example, the thickness of the antenna or antenna layer may be in the order of microns.

In view of the exemplary configuration of Figure 5, a security element according to an embodiment may have a layered structure, such that the antenna of the RFID tag is implemented in an antenna layer (i.e. antenna layer 53) which is tied to a substrate layer (i.e. PET layer 56) by one adhesive (i.e. adhesive 54), and the chip of the RFID tag (i.e. chip 51) is tied to the antenna layer (i.e. antenna layer 53) by an adhesive (i.e. adhesive 52).

It is to be noted that the configuration of Figure 5 is only an example, and various modifications are conceivable without departing from the foregoing description of an exemplary layered structure of a security element according to an embodiment. For example, the adhesive 57 may be omitted, the substrate layer may be formed of another material than PET, there may be an adhesive between the metal layer 55 and the PET layer 56, the antenna layer 53 may occupy the entirety of the lower layers, the dimension/extension of the metal layer 55 may be different (with respect to e.g. the antenna layer 53, such as e.g. being at least partly below the antenna layer 53), the chip 51 does not need to be placed in the middle, or the like.

Figure 6 shows a third example of a cross-sectional view of a security element according to an embodiment, namely an example of a cross-section along line A-A in Figure 3.

As shown in Figure 6, a security element 60 according to an embodiment has a layered structure comprising, from top to bottom (in the drawing), a chip 61, an adhesive 62, an antenna layer 63, an adhesive 64, a metal layer 65, a PET (polyethylene terephthalate) layer 66 and an adhesive 67.

In such configuration, the metal layer 65 cooperates with the antenna layer 63 for providing/realizing the antenna function (i.e. the RF signal emission/radiation functionality) of the security element. Namely, the metal layer reflects and thus amplifies the RF signal being emitted/radiated by the antenna. For example, the thickness of the antenna or antenna layer may be in the order of microns.

In view of the exemplary configuration of Figure 6, a security element according to an embodiment may have a layered structure, such that the antenna of the RFID tag is implemented in an antenna layer (i.e. antenna layer 63) which is tied to a substrate layer (i.e. PET layer 66) via a metal layer (i.e. metal layer 65) by an adhesive (i.e. adhesive 64), and the chip of the RFID tag (i.e. chip 61) is tied to the antenna layer (i.e. antenna layer 63) by an adhesive (i.e. adhesive 62).

It is to be noted that the configuration of Figure 6 is only an example, and various modifications are conceivable without departing from the foregoing description of an exemplary layered structure of a security element according to an embodiment. For example, the adhesive 67 may be omitted, the substrate layer may be formed of another material than PET, there may be an adhesive between the metal layer 65 and the PET layer 66, the antenna layer 63 may occupy only a part of the lower layers and/or may be (at least partly) surrounded by adhesive, the dimension/extension of the metal layer 65 may be different (with respect to e.g. the antenna layer 63, such as e.g. having an opening below the antenna layer 63), the chip 61 does not need to be placed in the middle, or the like.

Figure 7 shows a fourth example of a cross-sectional view of a security element according to an embodiment, namely an example of a cross-section along line A-A in Figure 3.

As shown in Figure 7, a security element 70 according to an embodiment has a layered structure comprising, from top to bottom (in the drawing), a chip 71, an adhesive 72, a metal layer 73 including an antenna, a PET (polyethylene terephthalate) layer 74 and an adhesive 75.

In view of the exemplary configuration of Figure 7, a security element according to an embodiment may have a layered structure, such that the antenna of the RFID tag is implemented in a metal layer (i.e. metal layer 73) formed on a substrate layer (i.e. PET layer 74), and the chip (i.e. chip 71) of the RFID tag is tied to the metal layer (i.e. metal layer 73) by an adhesive (i.e. adhesive 72).

In such configuration, the metal layer 73 comprises the antenna of the RFID tag. This may be realized in that, for example, the antenna of the RFID tag is implemented by demetallization of a metal layer (i.e. metal layer 73) on a substrate layer (i.e. PET layer 74) or by a metallization process forming a shape of the antenna from metal on a carrier substrate (i.e. PET layer 74). It may thus be said that the antenna is constituted by a metalized area or shape of/on a film like the PET layer 74. For example, the thickness of the antenna or antenna layer may be in the order of angstrom.

It is to be noted that the configuration of Figure 7 is only an example, and various modifications are conceivable without departing from the foregoing description of an exemplary layered structure of a security element according to an embodiment. For example, the adhesive 75 may be omitted, the substrate layer may be formed of another material than PET, there may be an adhesive between the metal layer 73 and the PET layer 74, the metal layer 73 and/or the thus included antenna may occupy only a part of the lower layers, the chip 71 may be tied to the metal layer 73 by/via the adhesive 72, the chip 71 does not need to be placed in the middle, or the like.

As explained above, there are provided a security sheet with an RFID security element, which is capable of improving protection against forgery or counterfeiting of the security sheet as such and/or a security document comprising or composed of the security sheet, as well as a method of manufacturing such security sheet, and a security document comprising or composed of such security sheet.

In the foregoing, various examples and embodiments of the security sheet, its manufacturing method and a related security document are disclosed. The thus disclosed examples and embodiments are for illustrative purposes, without limiting the present invention. Rather, it is to be understood that the skilled person readily conceives applicable modifications, alterations and/or replacements. The present disclosure also covers any conceivable combination of structural or functional elements described above, as long as the above-described concepts of methodology and structural arrangement are applicable.

In view of the above, there is provided a security sheet as well as a manufacturing method thereof and a security document comprising or being composed of such security sheet, wherein the security sheet comprises a sheet material and a security element embedded in the sheet material. The security element includes a passive RFID tag comprising at least a chip with a memory and an antenna. A universal unique identifier for uniquely identifying the security sheet is invariably stored in the memory. The universal unique identifier comprises a unique code representing a unique random number generated during manufacturing of the security sheet and stored in a memory area which is protected by a one-time password for a single writing operation during manufacturing of the security sheet.

Even though the present disclosure is described above with reference to the examples according to the accompanying drawings, it is to be understood that the present disclosure is not restricted thereto. Rather, it is apparent to those skilled in the art that the present disclosure can be modified in many ways without departing from the scope of the inventive idea as disclosed herein.

## Claims

1. A security sheet (10) comprising
a sheet material (11), and
a security element (12), wherein
the security element is embedded in the sheet material,
the security element includes a passive RFID tag (13) comprising at least a chip (15) with a memory (17) and an antenna (14), and
a universal unique identifier for uniquely identifying the security sheet is invariably stored in the memory,
**characterized in that**
the universal unique identifier comprises a unique code representing a unique random number generated during manufacturing of the security sheet and stored in a memory area which is protected by a one-time password for a single writing operation during manufacturing of the security sheet.

2. The security sheet according to claim 1, wherein
the universal unique identifier is composed of a unique tag identifier of the RFID tag and the unique code.

3. The security sheet according to claim 2, wherein
the protected memory area, in which the unique code is stored, is an electronic product code memory area of the RFID tag, and/or
the unique tag identifier is stored in a tag identifier memory area of the RFID tag.

4. The security sheet according to any one of claims 1 to 3, wherein
the RFID tag is configured to radiate an RF signal indicative of or representing the universal unique identifier.

5. The security sheet according to any one of claims 1 to 4, wherein
a hash value of the universal unique identifier is registered in at least one blockchain.

6. The security sheet according to any one of claims 1 to 5, wherein
the security element has a layered structure, wherein
the antenna of the RFID tag is implemented in an antenna layer which is tied to a substrate layer by at least one adhesive, and
the chip of the RFID tag is tied to the antenna layer by an adhesive.

7. The security sheet according to any one of claims 1 to 5, wherein
the security element has a layered structure, wherein
the antenna of the RFID tag is implemented in a metal layer formed on a substrate layer, and
the chip of the RFID tag is tied to the metal layer by an adhesive.

8. The security sheet according to claim 7, wherein
the antenna of the RFID tag is implemented by demetallization of a metal layer on a substrate layer or by a metallization process forming a shape of the antenna from metal on a carrier substrate.

9. The security sheet according to any one of claims 1 to 8, wherein
the security element has the form of any one of a thread, a strip or a patch, and/or
the sheet material is or comprises any one of paper or plastic.

10. A security document comprising or composed of the security sheet according to any one of claims 1 to 9.

11. The security document according to claim 10, wherein
the security document comprises or is any one of a banknote, a passport, an ID card, a bank card, a credit card, a bond, a check, a coupon, a voucher, a ticket, a package, a stamp, a certificate or any type of document to be protected and/or uniquely identified.

12. A method of manufacturing a security sheet (10), comprising:
providing (S210) a security element (12) which includes a passive RFID tag (13) comprising at least a chip (15) with a memory (17) and an antenna (14), wherein a universal unique identifier for uniquely identifying the security sheet is invariably stored in the memory, and
embedding (S220) the security element (12) in a sheet material,
**characterized in that**
the universal unique identifier comprises a unique code representing a unique random number generated during manufacturing of the security sheet and stored in a memory area which is protected by a one-time password for a single writing operation during manufacturing of the security sheet.

13. The manufacturing method according to claim 12, further comprising:
generating the unique random number, and
storing the unique code representing the generated unique random number in the protected memory area using the one-time password.

14. The manufacturing method according to claim 12 or 13, wherein
the universal unique identifier is composed of a unique tag identifier of the RFID tag and the unique code.

15. The manufacturing method according to claim 14, wherein
the protected memory area, in which the unique code is stored, is an electronic product code memory area of the RFID tag, and/or
the unique tag identifier is stored in a tag identifier memory area of the RFID tag.

16. The manufacturing method according to any one of claims 12 to 15, further comprising:
configuring the RFID tag to radiate an RF signal indicative of or representing the universal unique identifier.

17. The manufacturing method according to any one of claims 12 to 16, further comprising:
computing a hash value of the universal unique identifier, and
registering the hash value of the universal unique identifier in at least one blockchain.

18. The manufacturing method according to any one of claims 12 to 17, wherein
the security element has a layered structure, and
the method further comprises:
tying an antenna layer, in which the antenna of the RFID tag is implemented, to a substrate layer by at least one adhesive, and
tying the chip of the RFID tag to the antenna layer by an adhesive.

19. The manufacturing method according to any one of claims 12 to 17, wherein
the security element has a layered structure, and
the method further comprises:
disposing a metal layer, in which the antenna of the RFID tag is implemented, on a substrate layer, and
tying the chip of the RFID tag to the metal layer by an adhesive.

20. The manufacturing method according to claim 19, further comprising:
implementing the antenna of the RFID tag by demetallization of a metal layer on a substrate layer or by a metallization process forming a shape of the antenna from metal on a carrier substrate.

21. The manufacturing method according to any one of claims 12 to 20, wherein
the security element has the form of any one of a thread, a strip or a patch, and/or
the sheet material is or comprises any one of paper or plastic.

## Patentansprüche

1. Eine Sicherheitsfolie (10), aufweisend
ein Folienmaterial (11), und
ein Sicherheitselement (12), wobei
das Sicherheitselement in das Folienmaterial eingebettet ist,
das Sicherheitselement einen passiven RFID-Tag (13) aufweist, der mindestens einen Chip (15) mit einem Speicher (17) und einer Antenne (14) umfasst, und
ein universell einzigartiger Identifikator zur eindeutigen Identifizierung des Sicherheitsblattes ist unveränderbar in dem Speicher gespeichert,
**dadurch gekennzeichnet, dass**
der universell einzigartige Identifikator einen einzigartigen Code aufweist, der eine einzigartige Zufallszahl darstellt, die während der Herstellung der Sicherheitsfolie erzeugt und in einem Speicherbereich gespeichert wird, der durch ein einmaliges Passwort für einen einzigen Schreibvorgang während der Herstellung der Sicherheitsfolie geschützt ist.

2. Die Sicherheitsfolie nach Anspruch 1, wobei
der universell einzigartige Identifikator aus einem einzigartigen Tag-Identifikator des RFID-Tags und dem einzigartigen Code gebildet ist.

3. Die Sicherheitsfolie nach Anspruch 2, wobei
der geschützte Speicherbereich, in dem der einzigartige Code gespeichert ist, ein elektronischer Produktcode-Speicherbereich des RFID-Tags ist, und/oder
der einzigartige Tag-Identifikator in einem Tag-Identifikator-Speicherbereich des RFID-Tags gespeichert ist.

4. Die Sicherheitsfolie nach einem der Ansprüche 1 bis 3, wobei
der RFID-Tag konfiguriert ist, um ein RF-Signal auszustrahlen, das den universell einzigartigen Identifikator anzeigt oder repräsentiert.

5. Die Sicherheitsfolie nach einem der Ansprüche 1 bis 4, wobei
ein Hash-Wert des universell einzigartigen Identifikators in mindestens einer Blockchain registriert ist.

6. Die Sicherheitsfolie nach einem der Ansprüche 1 bis 5, wobei
das Sicherheitselement eine geschichtete Struktur aufweist, wobei
die Antenne des RFID-Tags in einer Antennenschicht implementiert ist, die durch mindestens einen Klebstoff mit einer Substratschicht verbunden ist, und
der Chip des RFID-Tags durch einen Klebstoff mit der Antennenschicht verbunden ist.

7. Die Sicherheitsfolie nach einem der Ansprüche 1 bis 5, wobei
das Sicherheitselement eine geschichtete Struktur aufweist, wobei
die Antenne des RFID-Tags in einer Metallschicht implementiert ist, die auf einer Substratschicht ausgebildet ist, und
der Chip des RFID-Tags durch einen Klebstoff mit der Metallschicht verbunden ist.

8. Die Sicherheitsfolie nach Anspruch 7, wobei
die Antenne des RFID-Tags durch Demetallisierung einer Metallschicht auf einer Substratschicht oder durch einen Metallisierungsprozess, der eine Form der Antenne aus Metall auf einem Trägersubstrat bildet, implementiert wird.

9. Die Sicherheitsfolie nach einem der Ansprüche 1 bis 8, wobei
das Sicherheitselement die Form eines Fadens, eines Streifens oder eines Flickens aufweist, und/oder
das Folienmaterial ein Papier oder ein Kunststoff ist oder aufweist.

10. Ein Sicherheitsdokument, das die Sicherheitsfolie nach einem der Ansprüche 1 bis 9 aufweist oder aus dieser besteht.

11. Das Sicherheitsdokument nach Anspruch 10, wobei
das Sicherheitsdokument eine Banknote, ein Reisepass, ein Personalausweis, eine Bankkarte, eine Kreditkarte, eine Anleihe, ein Scheck, ein Coupon, ein Gutschein, ein Ticket, ein Paket, eine Briefmarke, ein Zertifikat oder eine beliebige Art von zu schützendem und/oder einzigartig identifiziertem Dokument ist oder aufweist.

12. Ein Verfahren zur Herstellung einer Sicherheitsfolie (10), das folgende Schritte aufweist:
Bereitstellen (S210) eines Sicherheitselements (12), das einen passiven RFID-Tag (13) aufweist, der mindestens einen Chip (15) mit einem Speicher (17) und eine Antenne (14) aufweist, wobei ein universeller einzigartiger Identifikator zur eindeutigen Identifizierung der Sicherheitsfolie unveränderbar in dem Speicher gespeichert ist, und
Einbetten (220) des Sicherheitselements (12) in ein Folienmaterial,
**dadurch gekennzeichnet, dass**
der universell einzigartige Identifikator einen einzigartigen Code aufweist, der eine einzigartige Zufallszahl darstellt, die während der Herstellung der Sicherheitsfolie erzeugt und in einem Speicherbereich gespeichert wird, der durch ein einmaliges Passwort für einen einzigen Schreibvorgang während der Herstellung der Sicherheitsfolie geschützt ist.

13. Das Herstellungsverfahren nach Anspruch 12, das ferner die folgenden Schritte aufweist:
Erzeugen der einzigartigen Zufallszahl, und
Speichern des einzigartigen Codes, der die erzeugte einzigartige Zufallszahl darstellt, in dem geschützten Speicherbereich unter Verwendung des einmaligen Passworts.

14. Das Herstellungsverfahren nach Anspruch 12 oder 13, wobei
der universell einzigartige Identifikator aus einem einzigartigen Tag-Identifikator des RFID-Tags und dem einzigartigen Code gebildet wird.

15. Das Herstellungsverfahren nach Anspruch 14, wobei
der geschützte Speicherbereich, in dem der einzigartige Code gespeichert ist, ein elektronischer Produktcode-Speicherbereich des RFID-Tags ist, und/oder
der einzigartige Tag-Identifikator in einem Tag-Identifikator-Speicherbereich des RFID-Tags gespeichert ist.

16. Das Herstellungsverfahren nach einem der Ansprüche 12 bis 15, ferner die folgenden Schritte aufweisend:
Konfigurieren des RFID-Tags, um ein HF-Signal auszustrahlen, das den universellen einzigartigen Identifikator anzeigt oder repräsentiert.

17. Das Herstellungsverfahren nach einem der Ansprüche 12 bis 16, ferner die folgenden Schritte aufweisend:
Berechnen eines Hash-Wertes des universell einzigartigen Identifikators, und
Registrieren des Hashwerts des universell einzigartigen Identifikators in mindestens einer Blockchain.

18. Das Herstellungsverfahren nach einem der Ansprüche 12 bis 17, wobei
das Sicherheitselement eine geschichtete Struktur aufweist, und
das Verfahren ferner die folgenden Schritte aufweist:
Binden einer Antennenschicht, in der die Antenne des RFID-Tags implementiert ist, an eine Substratschicht durch mindestens einen Klebstoff, und
das Verbinden des Chips des RFID-Tags mit der Antennenschicht durch einen Klebstoff.

19. Das Herstellungsverfahren nach einem der Ansprüche 12 bis 17, wobei
das Sicherheitselement eine Schichtstruktur aufweist, und
das Verfahren ferner die nachfolgenden Schritte aufweist:
Anordnen einer Metallschicht, in der die Antenne des RFID-Tags implementiert ist, auf einer Substratschicht, und
Binden des Chips des RFID-Tags an die Metallschicht durch einen Klebstoff.

20. Das Herstellungsverfahren nach Anspruch 19, ferner aufweisend:
Implementieren der Antenne des RFID-Tags durch Demetallisierung einer Metallschicht auf einer Substratschicht oder durch einen Metallisierungsprozess, der eine Form der Antenne aus Metall auf einem Trägersubstrat bildet.

21. Das Herstellungsverfahren nach einem der Ansprüche 12 bis 20, wobei
das Sicherheitselement die Form eines Fadens, eines Streifens oder eines Flickens aufweist, und/oder
das Folienmaterial ein Papier oder ein Kunststoff ist oder aufweist.

## Revendications

1. Feuille de sécurité (10) comprenant :
un matériau en feuille (11), et
un élément de sécurité (12), dans laquelle
l'élément de sécurité est incorporé dans le matériau en feuille,
l'élément de sécurité comprend une étiquette RFID passive (13) comprenant au moins une puce (15) avec une mémoire (17) et une antenne (14), et
un identifiant unique universel permettant d'identifier de manière unique la feuille de sécurité qui est invariablement stocké dans la mémoire,
**caractérisée en ce que**
l'identifiant unique universel comprend un code unique représentant un nombre aléatoire unique généré lors de la fabrication de la feuille de sécurité et stocké dans une zone de mémoire qui est protégée par un mot de passe à usage unique pour une seule opération d'écriture lors de la fabrication de la feuille de sécurité.

2. Feuille de sécurité selon la revendication 1, dans laquelle :
l'identifiant unique universel est composé d'un identifiant d'étiquette unique de l'étiquette RFID et du code unique.

3. Feuille de sécurité selon la revendication 2, dans laquelle :
la zone de mémoire protégée, dans laquelle le code unique est stocké, est une zone de mémoire de code produit électronique de l'étiquette RFID, et/ou
l'identifiant d'étiquette unique est stocké dans une zone de mémoire d'identifiant d'étiquette de l'étiquette RFID.

4. Feuille de sécurité selon l'une quelconque des revendications 1 à 3, dans laquelle
l'étiquette RFID est configurée pour émettre un signal RF indiquant ou représentant l'identifiant unique universel.

5. Feuille de sécurité selon l'une quelconque des revendications 1 à 4, dans laquelle
une valeur de hachage de l'identifiant unique universel est enregistrée dans au moins une chaîne de blocs.

6. Feuille de sécurité selon l'une quelconque des revendications 1 à 5, dans laquelle
l'élément de sécurité a une structure en couches, dans laquelle
l'antenne de l'étiquette RFID est mise en place dans une couche d'antenne qui est liée à une couche de substrat par au moins un adhésif, et
la puce de l'étiquette RFID est liée à la couche d'antenne par un adhésif.

7. Feuille de sécurité selon l'une quelconque des revendications 1 à 5, dans laquelle
l'élément de sécurité a une structure en couches, dans laquelle
l'antenne de l'étiquette RFID est mise en place dans une couche métallique formée sur une couche de substrat, et
la puce de l'étiquette RFID est liée à la couche métallique par un adhésif.

8. Feuille de sécurité selon la revendication 7, dans laquelle :
l'antenne de l'étiquette RFID est mise en place par démétallisation d'une couche métallique sur une couche de substrat ou par un procédé de métallisation formant une forme de l'antenne à partir de métal sur un substrat porteur.

9. Feuille de sécurité selon l'une quelconque des revendications 1 à 8, dans laquelle
l'élément de sécurité se présente sous la forme de l'un quelconque d'un fil, d'une bande ou d'un patch, et/ou
le matériau en feuille est ou comprend l'un quelconque du papier ou du plastique.

10. Document de sécurité comprenant ou composé de la feuille de sécurité selon l'une quelconque des revendications 1 à 9.

11. Document de sécurité selon la revendication 10, dans lequel :
le document de sécurité comprend ou est l'un quelconque d'un billet de banque, un passeport, une carte d'identité, une carte bancaire, une carte de crédit, une obligation, un chèque, un coupon, un bon, un billet, un paquet, un timbre, un certificat ou tout autre type de document à protéger et/ou à identifier de manière unique.

12. Procédé de fabrication d'une feuille de sécurité (10), comprenant :
la fourniture (S210) d'un élément de sécurité (12) qui comprend une étiquette RFID passive (13) comportant au moins une puce (15) avec une mémoire (17) et une antenne (14), dans lequel un identifiant unique universel permettant d'identifier de manière unique la feuille de sécurité est invariablement stocké dans la mémoire, et
l'intégration (S220) de l'élément de sécurité (12) dans un matériau en feuille,
**caractérisé en ce que** :
l'identifiant unique universel comprend un code unique représentant un nombre aléatoire unique généré lors de la fabrication de la feuille de sécurité et stocké dans une zone de mémoire qui est protégée par un mot de passe à usage unique pour une seule opération d'écriture lors de la fabrication de la feuille de sécurité.

13. Procédé de fabrication selon la revendication 12 comprenant en outre :
la génération du nombre aléatoire unique, et
le stockage du code unique représentant le nombre aléatoire unique généré dans la zone de mémoire protégée à l'aide du mot de passe à usage unique.

14. Procédé de fabrication selon la revendication 12 ou 13, dans lequel :
l'identifiant unique universel est composé d'un identifiant d'étiquette unique de l'étiquette RFID et du code unique.

15. Procédé de fabrication selon la revendication 14, dans lequel :
la zone de mémoire protégée, dans laquelle le code unique est stocké, est une zone de mémoire de code produit électronique de l'étiquette RFID, et/ou
l'identifiant d'étiquette unique est stocké dans une zone de mémoire d'identifiant d'étiquette de l'étiquette RFID.

16. Procédé de fabrication selon l'une quelconque des revendications 12 à 15, comprenant en outre :
la configuration de l'étiquette RFID pour qu'elle émette un signal RF indiquant ou représentant l'identifiant unique universel.

17. Procédé de fabrication selon l'une quelconque des revendications 12 à 16, comprenant en outre :
le calcul d'une valeur de hachage de l'identifiant unique universel, et
l'enregistrement de la valeur de hachage de l'identifiant unique universel dans au moins une chaîne de blocs.

18. Procédé de fabrication selon l'une quelconque des revendications 12 à 17, dans lequel :
l'élément de sécurité a une structure en couches, et
le procédé comprend en outre :
la liaison d'une couche d'antenne, dans laquelle l'antenne de l'étiquette RFID est mise en place, sur une couche de substrat au moyen d'au moins un adhésif, et
la liaison de la puce de l'étiquette RFID à la couche d'antenne à l'aide d'un adhésif.

19. Procédé de fabrication selon l'une quelconque des revendications 12 à 17, dans lequel :
l'élément de sécurité a une structure en couches, et
le procédé comprend en outre :
la disposition d'une couche métallique, dans laquelle l'antenne de l'étiquette RFID est mise en place, sur une couche de substrat, et
la liaison de la puce de l'étiquette RFID à la couche métallique à l'aide d'un adhésif.

20. Procédé de communication selon la revendication 19 comprenant en outre :
la mise en place de l'antenne de l'étiquette RFID par démétallisation d'une couche métallique sur une couche de substrat ou par un procédé de métallisation formant une forme de l'antenne à partir de métal sur un substrat porteur.

21. Procédé de fabrication selon l'une quelconque des revendications 12 à 20, dans lequel :
l'élément de sécurité se présente sous la forme de l'un quelconque d'un fil, d'une bande ou d'un patch, et/ou
le matériau en feuille est ou comprend l'un quelconque du papier ou du plastique.
